(19) Europäisches Patentamt
European Patent Office
Office européen des brevets

(11) Veröffentlichungsnummer: **0 138 922**
**B1**

# (12) EUROPÄISCHE PATENTSCHRIFT

(45) Veröffentlichungstag der Patentschrift: **26.08.87**

(51) Int. Cl.⁴: **C 08 G 59/42**, C 08 L 63/00, C 08 L 33/00, C 08 L 67/00, C 09 D 3/58, C 09 D 3/64, C 09 D 3/80, C 09 D 5/44

(21) Anmeldenummer: **84901333.9**

(22) Anmeldetag: **30.03.84**

(86) Internationale Anmeldenummer: **PCT/DE 84/00074**

(87) Internationale Veröffentlichungsnummer: **WO 84/04099 (25.10.84** Gazette **84/25)**

## (54) HITZEHÄRTBARE BINDEMITTELMISCHUNG.

(30) Priorität: **09.04.83 DE 3312814**

(43) Veröffentlichungstag der Anmeldung: **02.05.85 Patentblatt 85/18**

(45) Bekanntmachung des Hinweises auf die Patenterteilung: **26.08.87 Patentblatt 87/35**

(84) Benannte Vertragsstaaten: **AT BE CH DE FR GB LI NL SE**

(56) Entgegenhaltungen:
**DE - A - 2 641 107**
**GB - A - 988 171**

(73) Patentinhaber: **BASF Lacke + Farben Aktiengesellschaft, Max-Winkelmann-Strasse 80, D-4400 Münster (DE)**

(72) Erfinder: **GEIST, Michael, Rubensstrasse 251, D-4400 Münster (DE)**
Erfinder: **OTT, Günther, von Holte Strasse 101 a, D-4400 Münster-Wolbeck (DE)**
Erfinder: **SCHÖN, Georg, Schillerstr. 2, D-4416 Everswinkel (DE)**

(74) Vertreter: **Habbel, Hans-Georg, Dipl.-Ing., Postfach 3429 Am Kanonengraben 11, D-4400 Münster (DE)**

EP 0 138 922 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine hitzehärtbare Bindemittelmischung, die aus einem organischen Kunstharz A und einem Vernetzungsmittel B besteht.

Zur Härtung durch Vernetzung der Bindemittel in Lackfilmen wurden vielerlei chemische Reaktionen vorgeschlagen und auch eingesetzt. Die während der Vernetzungsreaktion entstehenden chemischen Bindungen genügen häufig nicht allen Anforderungen, die an die Lackfilme gestellt werden.

Für die Grundierung von elektrisch leitfähigen Substraten hat in den letzten Jahren die Elektrotauchlackierung weite Verbreitung gefunden. Im Vordergrund stand bisher die anodische Elektrotauchgrundierung. Die hierfür eingesetzten Harzbindemittel gehören zu den Carboxylgruppen enthaltenden Harzen, z.B. zu den Maleinatölen, maleinisierten Epoxidharzen, Alkydharzen, Acrylharzen und insbesondere zu den maleinisierten Polybutadienen. Durch Salzbildung, vornehmlich mit Aminen, wurden diese Harze wasserlöslich gemacht und an der Anode im Elektrotauchbad durch den Strom abgeschieden. Das anodische Eektrotauchgrundierungsverfahren enthält jedoch schwerwiegende Nachteile. So wird während der elektrischen Abscheidung an der Anode Sauerstoff entwickelt, der die sich an der Anode abscheidenen Harze in schwerwiegender, nachteiliger Art und Weise verändern kann. Desweiteren gehen an der Anode Metallionen in Lösung, die im eingebrannten Film als Störstellen enthalten sind. Die Metallionen können zur Verfärbung und Fleckenbildung führen. Qualitative Nachteile verursachen sie insbesondere durch Salzbildung und damit durch Herabsetzung der Wasserfestigkeit und des Korrosionsschutzes.

Das in den letzten Jahren zur Marktreife entwickelte kathodische Elektrotauchgrundierverfahren verdrängt in zunehmendem Masse das anodische Verfahren, da die oben beschriebenen Mängel weitgehend vermieden werden. So bildet sich an der Kathode, an der nun der Lackfilm abgeschieden wird, während des Abscheidevorganges Wasserstoff, der das Harzbindemittel nicht beeinflusst. Da im annähernd neutralen pH-Bereich die kathodische Abscheidung erfolgen kann, gehen kaum Metallionen in Lösung. Die für die kathodische Abscheidung geeigneten Bindemittel enthalten überwiegend Aminogruppen, die zur Wasserlöslichmachung mit Säuren neutralisiert werden.

Es ist Aufgabe der Erfindung, eine Bindemittelmischung zur Herstellung von Überzugsmitteln zu schaffen, die Überzüge mit hervorragenden technischen Eigenschaften ergeben. Durch die erfindungsgemässe Bindemittelmischung soll die Umweltbelastung bei der Applikation der entsprechenden Überzugsmittel herabgesetzt werden. Die Überzugsmittel auf Basis der erfindungsgemässen Bindemittelmischung sollen ferner für alle Arten von Applikationsverfahren geeignet sein, d.h. die Bindemittelmischung soll konventionell zu applizierende Einbrennlacke, für Pulverlacke, für wässrige Pulver-Slurries und für Elektrotauchbäder verwendet werden können. Ferner soll die Bindemittelmischung eine verbesserte Reaktivität und bei Verwendung für wässrige Systeme eine verbesserte Dispersionsstabilität aufweisen.

Diese Aufgabe wird bei einer Bindemittelmischung der eingangs genannten Art erfindungsgemäss dadurch gelöst, dass das Kunstharz A ein von Epoxidgruppen freies Epoxidharzderivat, Polyesterharzderivat oder Acrylatharzderivat mit einem zahlenmittleren Molekulargewicht von 500 bis 20 000 und mindestens 0,2 Äquivalenten je 100 g Harz an primären und/oder sekundären Aminogruppen und/oder Hydroxylgruppen ist und das Vernetzungsmittel B eine organische Verbindung mit mindestens 2 β-Alkoxyalkylestergruppen pro Molekül ist.

Die Bindemittelmischung enthält vorteilhaft zusätzlich zu den Komponenten A und B als Komponente C Pigmente, Füllstoffe, Vernetzungskatalysatoren, Korrosionsschutzinhibitoren und weitere Lackhilfsmittel.

Vorteilhaft betragen der Anteil der Komponente A 40-95 Gew.-% und der der Komponente B 5-60 Gew.-%, wobei die Summe der Komponenten A und B 100% beträgt.

Während des Einbrennvorganges reagieren nun die β-Alkoxyalkylestergruppen der Komponente B mit den primären und/oder sekundären Aminogruppen und/oder Hydroxygruppen der Komponente A unter Bildung einer Amidbindung und/oder Esterbildung. Der basische Stickstoff der Aminogruppe des Harzes der Komponente A wird also in einen pHneutralen Amidstickstoff im eingebrannten Film überführt. Der eingebrannte Film enthält somit keine basischen Störstellen. Der Vernetzungsmechanismus ist im Prinzip in folgendem Reaktionsschema beschrieben:

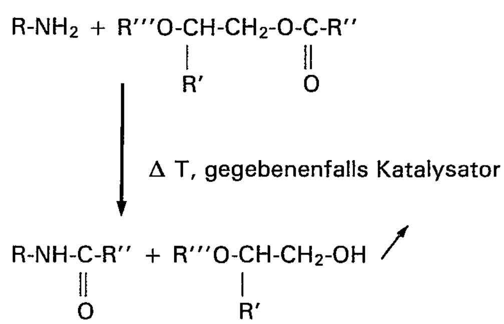


In analoger Weise reagieren die Hydroxylgruppen mit den β-Alkoxyalkylestergruppen

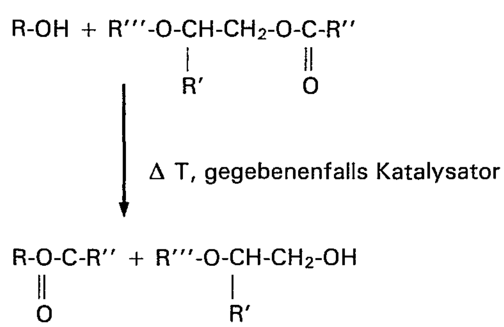


Diese Vernetzungsreaktionen werden in der erfindungsgemässen Ausgestaltung durch den -I-Effekt der Estergruppe des Vernetzers β-ständigen Alkoxy-

gruppe entscheidend begünstigt. Darüber hinaus kommt bei der metallkatalysierten Aminolyse bzw. Alkoholyse der β-ständige Alkoxy-Sauerstoff durch seinen Nachbargruppeneffekt in besonders günstiger Weise zum Tragen. Die abgespalteten β-Hydroxyalkylether weisen darüber hinaus einen derartigen Siedepunkt auf, dass sie während des Einbrennvorganges vorteilhaft als Verlaufshilfsmittel wirken lässt.

In der EP 12 463 wird ein ähnlicher Vernetzungsmechanismus beschrieben. Dort werden Hydroxylgruppen während des Einbrennvorganges mit β-Hydroxyalkylestergruppen zur Reaktion gebracht. Die Spaltprodukte sind 1,2-Diole. Diese weisen, wie es dem Fachmann geläufig ist, einen hohen Siedepunkt auf.

So hat zum Beispiel das Butandiol-1,2 bei einem Molekulargewicht von 90 einen Siedepunkt von 192°C.

Im Gegensatz hierzu hat das isomere 2-Ethoxyethanol einen Siedepunkt von 135°C.

Verbleiben die Spaltprodukte im oder auf dem eingebrannten Film, kann es zu Zwischenhaftungsschwierigkeiten mit der nachfolgenden Lackierung kommen. Auch diese Probleme werden durch die erfindungsgemässen Bindemittel umgangen. Die während des Einbrennens entstehende Amidbindung wirkt sich sehr vorteilhaft auf die Haftung des Films, insbesondere auf Metallsubstraten, aus. Ebenso wird hierdurch die Elastizität des Filmes gesteigert. Dieser Vernetzungsmechanismus bewirkt eine hohe Beständigkeit des Lackfilms gegen Lösungsmittel, Alkalien und Salzsprühnebel. Bereits auf nicht vorbehandeltem Eisenblech bilden die Filme auch ohne Korrosionsschutzinhibitoren sehr resistente Überzüge aus.

Aus der GB-A-988 171 sind ferner hitzehärtende Harzzusammensetzungen bekannt, die eine nichtionisierbare Polyepoxidverbindung in Kombination mit einem Polymer oder Copolymer eines Ätheralkoholesters enthalten und beim Erhitzen in Gegenwart von molekularem Sauerstoff vernetzen. Diese bekannten Zusammensetzungen sind sowohl in ihrer chemischen Natur als auch in bezug auf den Vernetzungsmechanismus vollständig unterschiedlich gegenüber dem erfindungsgemässen System.

Die Komponente A der Bindemittelmischung weist eine zahlenmittlere Molmasse von 500 bis 20 000 auf, vorzugsweise von 600 bis 10 000.

Die komponente A ist ein organisches Harz mit primären und/oder sekundären Aminogruppen und/oder Hydroxylgruppen. Gegebenenfalls können zusätzlich auch tertiäre Aminogruppen vorhanden sein.

Die chemische Natur des Kunstharzes A ist nicht kritisch. Sie kann je nach den geforderten Eigenschaften der Bindemittelmischung zwischen einem von Epoxidgruppen freien Epoxidharzderivat, einem Polyesterharzderivat oder einem Acrylharzderivat gewählt werden, wesentlich ist es, dass die Harze eine ausreichende Menge an primären und/oder sekundären Aminogruppen und/oder Hydroxylgruppen aufweisen, die nach dem obenbeschriebenen Mechanismus mit dem Vernetzungsmittel B reagieren können.

Das Einführen der primären und/oder sekundären Aminogruppen in das organische Harz zur Herstellung der Komponente A erfolgt vorzugsweise durch Reaktion eines Polyamins und/oder eines amino- und/oder hydroxylgruppenhaltigen Ketimins mit Harzen, die mindestens eine, vorzugsweise mindestens zwei Epoxidgruppen je Molekül enthalten.

Die Hydroxylgruppen werden in diese Bindemittel vorteilhaft über sekundäre (Hydroxyalkyl)alkylamine oder Dihydroxyalkylamine eingeführt.

Als besonders geeignet für die Herstellung der Komponente A erweisen sich epoxidgruppenhaltige Harze mit vorzugsweise endständigen Epoxidgruppen aus der Gruppe der Polyglycidylether, Polyglycidylester und der Polyglycidylamine.

Andere vorteilhafte geeignete epoxidgruppenhaltige Harze sind Copolymerisate von Acrylsäure- und/oder Methacrylsäureglycidylester oder einer anderen, eine Glycidylgruppe tragenden, olefinisch ungesättigten, polymerisierbaren Verbindung mit Alkyl- und/oder Hydroxylalkylestern der Acryl- und/oder Methacrylsäure und/oder Vinylverbindungen wie Styrol, Vinyltoluol oder Vinylcarbazol.

Eine weitere bevorzugt geeignete Harzgruppe sind teilepoxidierte Polybutadienöle.

Unter Polyglycidylether im Rahmen dieser Erfindung werden vorzugsweise solche Polyglycidylether der allgemeinen Formel

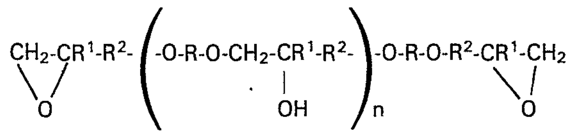

mit

R =

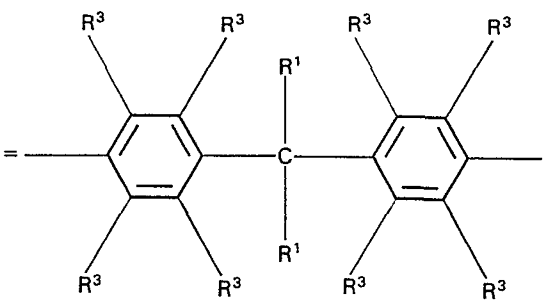

$R^1$ = H oder $C_nH_{2n} + 1$
$R^2$ = $(CR^1_2)_n$
$R^3$ = $R^1$, Halogen und bevorzugt H
n = 0 bis 5

verstanden.

Die Polyglycidylether der aufgeführten allgemeinen Formel haben eine zahlenmittlere Molmasse von etwa 340 bis 5 000 und dementsprechend ein Epoxidäquivalentgewicht von 170 bis 2 500. Die Epoxidharze können auch hydriert oder teilhydriert eingesetzt werden. Zur Steuerung der Filmeigenschaften kann ein Teil der reaktionsfähigen Gruppen des Epoxidharzes mit anderen Verbindungen umgesetzt werden.

Hierfür bieten sich an:

a) Carboxylgruppenhaltige Verbindungen wie gesättigte oder ungesättigte Monocarbonsäuren (z.B. Benzoesäure, Leinölfettsäure, 2-Ethylhexylsäure, Versaticsäure), aliphatische, cycloaliphatische und/oder aromatische Dicarbonsäuren verschiedener Kettenlängen (z.B. Adipinsäure, Sebacinsäure, Isophthalsäure oder dimere Fettsäuren), Hydroxyalkylcarbonsäuren (z.B. Milchsäure, Dimethylolpropionsäure) wie carboxylgruppenhaltige Polyester oder

b) Aminogruppenhaltige Verbindungen wie Diethylamin oder Ethylhexylamin oder Diamine mit sekundären Aminogruppen, wie z.B. N,N'-Dialkylalkylendiamin wie Dimethylethylendiamin, N,Ny'-Dialkyl-polyoxialkylenamin wie N,N'-Dimethyl-polyoxipropylendiamin, Polyaminoamide wie Versamide oder das Umsetzungsprodukt von einem Mol Diaminohexan mit zwei Molen Monoglycidylether oder Monoglycidylester, speziell Glycidylester α-verzweigter Fettsäuren wie der Versaticsäure, oder

c) Hydroxylgruppenhaltige Verbindungen, wie Neopentylglykol, bisethoxyliertes Neopentylglykol, Hydroxypivalinsäureneopentylglykolester, Dimethylhydantoin-N,N'-diethanol, Hexandiol-1,6, Hexandiol-2,5, Buten-2-diol-1,4, Butin-2-diol-1,4, Hexin-3-diol-2,5 oder andere Alkindiole, 1,4-Bis-(hydroxymethyl)-cyclohexan, 1,1-Isopropyliden-bis-(p-phenoxy)-2-propanol, Trimethylolpropan, Pentaerythrit oder Aminoalkohole, wie Triethanolamin, Methyldiethanolamin oder hydroxylgruppenhaltige Alkylketimine wie Aminomethylpropandiol-1,3-methyl-isobutylketimin oder Tris-(hydroxymethyl)-aminomethan-cyclohexanonketimin sowie auch Polyglykolether, Polyesterpolyole, Polyetherpolyole, Polycaprolactonpolyole, verschiedener Funktionalität und Molekulargewichte.

Anstelle der Polyglycidylether auf Basis Bisphenol A können auch Polyglycidylether auf Basis anderer Grundkomponenten, wie Triglycidylisocyanurat, heterocyclische Diglycidylverbindungen oder Diglycidylhydantoine eingesetzt werden.

Als Polyglycidylester sind Umsetzungsprodukte von z.B. Terephthalsäurebisglycidylester oder Isophthalsäurebisglycidylester mit z.B. Bisphenol A geeignet. Das Epoxidäquivalentgewicht dieser Produkte liegt zwischen 200 bis 2500. Zur Steuerung der Filmeigenschaften kann ein Teil der verbliebenen, reaktiven Glycidylgruppen mit anderen Verbindungen umgesetzt werden. Hierfür bieten sich die vorstehend unter a, b und c genannten Verbindungen an.

Unter Polyglycidylaminen werden solche glycidylgruppenhaltigen Harze verstanden, die man durch Einführung von Glycidylgruppen über z.B. Epichlorhydrin in $NH_2$-funktionelle Harze erhält.

Bevorzugt geeignet sind auch Copolymerisate von Acryl- und/oder Methacrylsäureglycidylester oder einer anderen, eine Glycidylgruppe tragende, olefinisch ungesättigten, polymerisierbaren Verbindung mit Estern der Acryl- und/oder Methacrylsäure sowie polymerisierbaren Vinylverbindungen, die eine zahlenmittlere Molmasse von 700 bis 10 000 und ein Epoxidäquivalentgewicht von 600 bis 3000 aufweisen. Bevorzugt sind die Acrylsäureester mit $C_2$ bis $C_8$-Alkohole und die Methacrylsäureester mit $C_1$ bis $C_4$-Alkohole. Die Copolymerisate können weitere Monomere enthalten wie Hydroxyalkyl(meth)acrylat oder (Meth)-acrylamid. Die Copolymerisation erfolgt in wohlbekannter Weise durch Lösungs-, Suspensions- oder Emulsionspolymerisation mit Zusatz radikalischer Initiatoren wie Peroxiden, Hydroxyperoxiden, Perestern oder thermolabiler Azoverbindungen sowie gegebenenfalls Molekulargewichtsreglern.

Unter teilepoxidierten Polybutadienölen werden Umsetzungsprodukte verstanden, die durch Reaktion von handelsüblichen Polybutadienölen mit Persäuren bzw. organischen Säure-$H_2O_2$-Mischungen erhalten werden. Die Darstellungsmethode wird z.B. in der Chemiker-Zeitung 95, 857f (1971) beschrieben.

Die epoxidgruppenhaltigen Harze werden mit Polyaminen und/oder einem amino- und/oder hydroxylgruppenhaltigen Ketimin umgesetzt. Wird die Anlagerung der primären und sekundären Aminogruppen tragenden Verbindungen in Form ihrer Ketimine durchgeführt, so sind die Reaktionsbedingungen so zu führen, dass im Reaktionsprodukt keine die Ketimine zersetzende Substanzen verbleiben. Bei den bevorzugten Ketiminen handelt es sich um Umsetzungsprodukte aus Ketonen und hydroxyl- oder sek. Aminogruppen enthaltene Alkylamine oder Alkyldiamine mit der allgemeinen Struktur R - NH - R - $NH_2$ bzw. HO - R - $NH_2$. Die Ketimine weisen z.B. folgende Struktur auf:

```
         R'
  X-N=C<
HN<      R
  Y

           R'                          R'
    X-N=C<                      X-N=C<
HO-CH<      R       HO-CH2-X-N<        R
    U                           U
```

wobei bedeuten:

X = $-(CR_2)_n-$
R = -H, -R'
R' = $-C_mH_{2m+1}$, $-C_6H_{11}$
U = -R, -Y

```
            R'
Y = -X-N=C<    , -X-OH, -R' oder -CH2-CH-CH2-O-Z-R'
            R                         |
                                      OH
```

Z = >CO, -X
n = 1-6
m = 1-12

Die zur Reaktion mit den primären Aminogruppen eingesetzen Ketone sind im allgemeinen aliphatische Ketone wie Methylethylketon, Diethylketon, Methylisobutylketon, Ethyl-n-propylketon und cycloaliphatische Ketone wie Cyclopentanon und Cyclohexanon. Bei den bevorzugten Aminoalkylaminen und Alkanolaminen handelt es sich überwiegend um Diethylentriamin, N-Methyl-ethylendiamin, N-Methylpropylendiamin, N-Aminoethyl-piperazin, 2-Aminoethanol, 1-Aminopropanol-2, 1-Aminopropanol-3, 2-Amino-2-methylpropanol-1, 3-Amino-2.2-dimethyl-propanol-1, 1.5-Diaminopentanol-3 oder N-(2-Aminoethyl)-N-(2-hydroxyethyl)-ethylendiamin.

Die exotherme Addition der obenbeschriebenen Aminoketimine an die Epoxidgruppen des Basisharzes der Bindemittelkomponente A erfolgt im allgemeinen bei Raumtemperatur. Zur vollständigen Umsetzung wird die Reaktion häufig bei Temperaturen zwischen 50 und 125°C beendet.

In ähnlichen Weise können die Hydroxylgruppen enthaltenden sekundären Amine in das Molekül eingeführt werden.

Die Bindemittelkomponente B, das Vernetzungsmittel, ist eine Verbindung, die mindestens 2-β-Alkoxyalkylestergruppen enthält. Das Vernetzungsmittel kann eine niedermolekulare Verbindung oder ein entsprechend substituiertes Harz sein. Wird zur Veresterung kein Alkohol mit einer Alkoxygruppe am β-Kohlenstoffatom eingesetzt, sondern Alkohole wie Methyl-, Ethyl- oder Butylalkohol, so läuft die Amidierungs- bzw. Umesterungsreaktion wesentlich langsamer ab.

Die Vernetzungsrate ist in diesem Fall zu gering, der eingebrannte Film ist gegen Lösungsmittel nicht ausreichend beständig. Diese Nachteile werden umgangen, wenn erfindungsgemäss β-Alkoxyalkylester zur Amidierungs- bzw. Umesterungsreaktion eingesetzt werden. Die Verbindungen, die den Vernetzer bilden, sind bevorzugt Polyesterharze, es können aber auch andere Verbindungen eingesetzt werden, die freie Carboxylgruppen enthalten und einer Veresterung zugänglich sind.

Als Vernetzerkomponente werden also Poly-(2-Alkoxyalkyl)-ester von Polycarbonsäuren eingesetzt. Sie können vorteilhaft auf folgende Weise dargestellt werden. Zuerst werden äquivalente Anteile eines Dicarbonsäureanhydrids (Phthalsäureanhydrid, Hexahydrophthalsäureanhydrid, Trimellithsäureanhydrid, Succinsäureanhydrid) mit einem Polyol (Glycerin, Trimethylolpropan, Pentaerythrit, Dipentaerythrit) bei Temperaturen unterhalb 145° umgesetzt. Das entstandene saure Zwischenprodukt wird dann durch Veresterung zum Endprodukt umgesetzt.

Eine weitere Herstellungsmöglichkeit besteht in der Umsetzung eines 2-Alkoxyalkohols mit äquimolaren Anteilen eines Dicarbonsäureanhydrids zum entsprechenden 2-Alkoxyalkyl-Halbester, der nachfolgend mit Polyglycidyl-Verbindungen in äquivalentem Verhältnis, bezogen auf die Glycidylgruppen, umgesetzt wird. Für die letztgenannte Umsetzung können vorteilhafterweise auch Katalysatoren eingesetzt werden, wie sie auch bei Umsetzungen von Carbonsäuren mit Epoxidverbindungen üblich sind. In besonders vorteilhafter Weise kann das Verhältnis saurem Halbester zur Polyepoxidverbindung so gewählt werden, dass die nach der Addition des Halbesters an die Epoxidgruppen entstandenen β-Hydroxy-Gruppen durch den verbleibenden Überschuss an Halbester teilweise oder vollständig in einer Kondensationsreaktion bei erhöhter Temperatur, gegebenenfalls unter Zuhilfenahme von Katalysatoren, verestert werden.

Vorteilhaft ist die Komponente B ein Polyacrylatharz aus den folgenden Monomeren:

a) 10-50 Gew.-% Acrylsäurealkylester mit 1 bis 18 Kohlenstoffatomen im Alkylrest und/oder Methacrylsäureester mit 2 bis 18 Kohlenstoffatomen in Alkylrest,

b) 0-60 Gew.-% Methacrylsäuremethylester,

c) 0-35 Gew.-% Styrol, α-Methylstyrol, o- und/oder p-Chlorstyrol, p-tert.-Butylstyrol, Vinyltoluol und/oder Vinylcarbazol und

d) 2-35 Gew.-% Acrylsäure- und/oder Methacrylsäure-β-Alkoxyalkylester oder einer anderen β-Alkoxyalkylestergruppen enthaltenden olefinischen, ungesättigten polymerisierbaren Verbindung, wobei die Summe der Bestandteile a, b, c und d 100% beträgt.

Die erfindungsgemässe Bindemittelmischung kann in feinteiliger, fester Form oder gelöst in einem organischen Lösungsmittel vorliegen.

Für die Elektrotauchlackierung ist es erforderlich, dass die Bindemittelmischung nach Protonisierung mit Säure in Form einer wässrigen Lösung oder Dispersion vorliegt. Die Wasserlöslichkeit der Bindemittelkomponente wird durch Neutralisation der in ihr enthaltenen primären, sekundären und/oder tertiären Aminogruppen mit Säuren bewirkt. Geeignete Säuren sind insbesondere organische Säuren. Bevorzugt werden die Aminogruppen mit Ameisensäure, Essigsäure, Malonsäure, Milchsäure oder Zitronensäure neutralisiert.

Die genannten Säuren können auch verwendet werden, wenn die Einführung der solubilisierenden Gruppen für die Bindemittelkomponente durch Anlagerung einer Ammoniumgruppe an das Bindemittel erfolgt.

Der Neutralisationsgrad der solubilisierenden Gruppen liegt, bezogen auf diese Gruppen, zwischen 0,2 bis 1,0 Äquivalent und bevorzugt zwischen 0,25 bis 0,6 Äquivalente Säure.

Die Neutralisation kann auf folgenden Wegen durchgeführt werden. Die Säure wird in Wasser, gegebenenfalls zusammen mit Dispergierhilfsmittel, vorgelegt und die Harzlösung wird bei Raumtemperatur oder gegebenanfalls bei erhöhten Temperaturen in das Wasser eingerührt. Die Säure kann aber auch direkt der Harzlösung zugegeben werden. Die neutralisierte Harzlösung kann in das Wasser eingerührt werden, gegebenenfalls kann man das Wasser auch langsam in die Harzlösung einarbeiten.

Die Dispersion kann zur Steuerung ihrer Viskosität, der Abscheidespannung und des Verlaufs bis zu 20% organische Lösungsmittel enthalten. Enthält der Ansatz durch das gewählte Darstellungsverfahren zuviel oder gar für die Eigenschaften schädliche Lösungsmittel, so kann man diese vor dem Dispergieren aus der Harzlösung herausdestillieren oder man destilliert sie aus der wässrigen Dispersion ab.

Vorteilhaft für die Summe aller Eigenschaften ist ein möglichst geringer Anteil an organischen Lösungsmitteln.

Der Festkörper eines Abscheidebades, das mit der erfindungsgemässen Dispersion angesetzt ist, beträgt 7-35 Gew.-Teile, bevorzugt aber 12-25 Gew.-Teile. Der pH-Wert des Abscheidebades liegt zwischen 4 und 8, vorzugsweise aber zwischen 5 und 7,5. Als Anoden des Abscheidebades werden nicht korrodierende Stahlanoden oder Graphitanoden verwendet. Die Temperatur des Badansatzes soll zwischen 15 bis 35°C, bevorzugt zwischen 20 und 30°C liegen. Die Abscheidedauer und -spannung werden so gewählt, dass die gewünschte Schichtstärke erreicht wird.

Nach der Abscheidung wird der beschichtete Gegenstand abgespült und ist zum Einbrennen bereit.

Unabhängig von dem Applikationsverfahren der auf Basis der erfindungsgemässen Bindemittelmischung hergestellten Überzugsmittel erfolgt die Vernetzung des Lackfilms während des Einbrennens bei Temperaturen von 130 bis 200°C über eine Zeitdauer von 10-60 Minuten, bevorzugt bei 150 bis 180°C während 15-30 Minuten.

Die Amidierungs- und/oder Veresterungsreaktion kann durch geeignete Katalysatoren noch beschleunigt werden. Hierzu sind insbesondere geeignet Ammoniumverbindungen wie Benzyltrimethylammoniumhydroxid, Benzyltrimethylammoniumchlorid, Trimethylacetylammoniumbromid oder Tetraammoniumjodid und organische Zinnverbindungen wie Dibutylzinndilaurat und Eisen-III-acetylacetonat, Zinkacetat, Zink-2-ethylhexoat, Kobaltnaphthenat, Bleiacetat oder Butyltitanat.

Die Pigmentierung erfolgt in wohlbekannter Weise. Hierbei werden die Pigmente sowie die üblichen Zusatzstoffe wie Füllstoffe, Korrosionsschutzinhibitoren und Antischaummittel in einer der beiden Bindemittelkomponenten angemahlen werden. Als Mahlaggregate können z.B. Sandmühlen, Kugelmühlen oder Dreiwalzen verwendet werden. Die Komplettierung des Lackes kann, wie alllgemein bekannt, erfolgen.

Hierzu können die Pigmente sowie die üblichen Zusatzstoffe wie Füllstoffe, Korrosionsschutzinhibitoren und Antischaummittel entweder in der Bindemittelkomponente oder in der Vernetzungskomponente angemahlen werden. Als Mahlaggregate können z.B. Sandmühlen, Kugelmühlen oder Dreiwalzen verwendet werden.

Die Einzelkomponenten A und B und gegebenenfalls die Komponente C können in Form ihrer konzentrierten Lösungen gemischt und gemeinsam dispergiert werden. Es ist aber auch möglich, die Komponenten A und B einzeln, wobei die Pigmente in A oder B angerieben sind, zu dispergieren und die Dispersion der Einzelkomponenten in dem erforderlichen Verhältnis zu vermischen.

Die Erfindung betrifft ferner ein Verfahren zum Herstellen von Überzügen durch Aufbringen eines Überzugsmittels auf ein Substrat in Form eines Filmes durch Einbrennen, wobei das Überzugsmittel eine Bindemittelmischung aus einem organischen Kunstharz A und einem Vernetzungsmittel B enthält, die dadurch gekennzeichnet ist, dass das Kunstharz A ein von Epoxidgruppen freies Epoxidharzderivat, Polyesterharzderivat oder Acrylatharzderivat mit einem zahlenmittleren Molekulargewicht von 500 bis 20 000 und mindestens 0,2 Äquivalenten je 100 g Harz an primären und/oder sekundären Aminogruppen und/oder Hydroxylgruppen ist und das Vernetzungsmittel B eine organische Verbindung mit mindestens 2 β-Alkoxyalkylestergruppen pro Molekül ist.

Vorteilhafte Ausgestaltungen des erfindungsgemässen Verfahrens ergeben sich aus den Unteransprüchen.

Die Erfindung betrifft weiterhin die Verwendung der beschriebenen Bindemittelmischungen für die Herstellung von Überzügen.

Im folgenden wird die Erfindung anhand von Ausführungsbeispielen näher erläutert.

*Beispiel:*

*Herstellung eines β-Alkoxyalkylester-Vernetzers 1*

In einem wärmeträgerölbeheizbaren Reaktionsgefäss mit Wasserabscheider, Rückflusskühler und zwischengeschalteter Raschig-Kolonne werden 1462 g Hexylglykol (10 mol) vorgelegt und unter Inertgaszufuhr und Rühren 1000 g Bernsteinsäureanhydrid (10 mol) eingetragen. Die Reaktionsmischung wird auf 120°C aufgeheizt, wobei die exotherme Wärmetönung die Temperatur kurzzeitig auf 130°C anhebt. Die Temperatur wird gehalten, bis die Säurezahl 230 mg KOH/g beträgt.

Anschliessend werden 400 g Xylol, 5 g N-Cetyl-N,N,N-trimethylammoniumbromid und 940 g eines Bisphenol A -Epoxidharzes mit einem Epoxyäquivalentgewicht von 188 (2,5 mol) zugegeben. Die Temperatur wird innerhalb von 1 Stunde wieder auf 130°C angehoben und dort gehalten, bis der Epoxidwert auf null abgesunken ist. Nach Zugabe von 2 g p-Toluolsulfonsäurelösung (25%ig in n-Propanol) wird die Temperatur innerhalb von 4 Stunden auf 200°C gesteigert, während das entstandene Reaktionswasser kontinuierlich ausgekreist wird. Nach weiterer Steigerung auf 220°C wird die Temperatur gehalten, bis annähernd 90 g Wasser abgeschieden sind, und die Säurezahl auf unter 2 mg KOH/g Festharz abgesunken ist. Sodann wird gekühlt und ohne Verdünnung ausgetragen.

Festkörper: 95,2 Gew.-% (gemessen 1-stündiges Erhitzen auf 130°C)
Säurezahl: 1,1 mg KOH/g Festharz
Viskosität: 480 mPas (gemessen nach Verdünnen mit Methyl-Isobutylketon auf 70 Gew.-% bei 25°C)

*Beispiel:*

*Herstellung eines β-Alkoxyalkylester-Vernetzers 2*

Es wird wie in Beispiel Vernetzer 1 verfahren, anstelle von Bernsteinsäureanhydrid werden jedoch 1141 g Glutarsäureanhydrid eingesetzt.

Festkörper: 96,4 Gew.-% (1 Stunde bei 130°C)
Säurezahl: 0,9 mg/KOH/g Festharz
Viskosität: 425 mPas (gemessen nach Verdünnen mit Methyl-Isobutylketon auf 70 Gew.-% bei 25°C).

*Beispiel 1*

*Herstellung einer Bindemittel-Dispersion 1*

In einem Reaktionsgefäss, ausgestattet mit Rührer, Rückflusskühler und Inertgaszuleitung werden 1786 g eines Polyglycidylethers auf Basis Bisphenol A mit einem Epoxidäquivalentgewicht von 893 zusammen mit 350 g eines Gemisches aus Methylisobutylketon und Xylol im Verhältnis 4:1 auf 80°C erwärmt. Nachdem alles geschmolzen ist, werden unter Rühren 208 g Diethanolamin zugegeben. Die Temperatur steigt exotherm auf 105°C an und wird dort 2 Stunden gehalten. Die klare Harzlösung wird sodann mit 940 g Vernetzer (Beispiel 1) und 160 g Hexylglykol versetzt und 15 Minuten bei 80°C homogenisiert.

Inzwischen wird ein Bad für die Dispergierung vorbereitet, in dem 37,4 g Eisessig, 42,1 g Hilfsemulgatorlösung und 1288 g entionisiertes Wasser vorgelegt sind, und in das 2000 g der oben beschrieben, noch warmen Harzmischung unter Rühren eingetragen werden. Es resultiert eine Dispersionsmischung mit einem Festgehalt von 50%, die noch weitere 2 Stunden gerührt wird. Sodann werden 50,5 g einer Blei (II)-octoatlösung (24% Pb) untergerührt und durch Zugabe von 1375,6 g entionisiertem Wasser langsam weiterverdünnt.

Festkörper: 36,2% (1 Std., 130°C)
AEQ-Base: 0,67 Milliäquivalente/g fest
MEQ-Säure: 0,38
pH-Wert: 5,9

*Beispiel 2*

*Herstellung einer Bindemittel-Dispersion 2*

Es wird gleich verfahren wie im Falle der Bindemittel-Dispersion 1, jedoch werden die 208 g Diethanolamin ersetzt durch 352 g einer 70%igen Lösung von Diethylentriamin-bis(methyl-isobutylketimin) in Methyl-Isobutylketon und 105 g Diethanolamin, die in der genannten Reihenfolge zugegeben werden.

Es resultiert eine Bindemittel-Dispersion mit folgenden Kennzahlen:

Festkörper: 33,4% (1 Std. bei 130°C)
MEQ-Base: 1,32 Milliäquivalente/g fest
MEQ-Säure: 0,39 Milliäquivalente/g
pH-Wert: 7,2.

*Beispiel 3*

*Herstellung einer Bindemittel-Dispersion 3*

Das Beispiel 1 wird wiederholt, jedoch wird an Stelle des Vernetzers 1 die gleiche Gewichtsmenge des Vernetzers 2 eingesetzt.

Kenndaten:
Festkörper: 36,4 = (1 Std. 130°C)
MEQ-Base: 0,69 Milliäquivalent/g fest
MEQ-Säure: 0,39 Milliäquivalent/g fest
pH-Wert: 6,0.

*Beispiel 4*

*Herstellung einer Bindemitteldispersion 4*

Das Beispiel 2 wird wiederholt, jedoch wird anstelle des Vernetzers 1 die gleiche Gewichtsmenge des Vernetzers 2 eingesetzt.

Kenndaten:
Festkörper: 33,6% (1 Std. 130°C)
MEQ-Base: 1,31 Milliäquivalent/g fest
MEQ-Säure: 0,42 Milliäquivalent/g fest
pH-Wert: 7,2.

*Darstellung einer grauen Pigmentpaste*

Zu 953 Teilen eines handelsüblichen Epoxidharzes auf Basis Bisphenol A mit einem Epoxidäquivalentgewicht von 890 werden 800 Teile Butylglykol gegeben. Die Mischung wird auf 80°C erhitzt. In die Harzlösung werden dann 221 Teile eines Vernetzungsproduktes aus 101 Teilen Diethanolamin und 120 Teilen 80%iger, wässriger Milchsäure gegeben. Man führt die Reaktion bei 80°C durch, bis die Säurezahl unter 1 gefallen ist.

1800 Teile dieses Produktes werden mit 2447 Teilen entionisiertem Wasser vorgelegt und mit 2460 Teilen $TiO_2$, 590 Teilen eines Extenders auf Basis Aluminiumsilikat, 135 Teilen Bleisilikat und 37 Teilen Russ vermengt. Diese Mischung wird in einem Mahlaggregat auf eine Hegman-Feinheit von 5-7 zerkleinert. Danach gibt man 1255 Teile entionisiertes Wasser zu, um die gewünschte Pastenkonsistenz zu erreichen. Diese graue Paste ist sehr lagerstabil.

*Herstellung der Elektrotauchbäder*

Aus den obenbeschriebenen Bindemitteldispersionen werden mit der obenbeschriebenen, grauen Pigmentpaste Lackbäder angesetzt.

Hierzu werden verwendet:
2280 Teile entionisiertes Wasser
25 Teile 10%ige Essigsäure
1920 Teile Bindemitteldispersion
775 Teile Pigmentpaste

Die Abscheidung der Lackfilme erfolgt bei 26°C Badtemperatur während 120 Sekunden. Hierzu werden zinkphosphatierte Bleche als Kathode geschaltet und beschichtet. Die Härtung der abgeschiedenen Filme erfolgt während 20 Minuten bei 185° im Umlufttrockenofen.

*Ergebnisse der Abscheidungen*

Die Ergebnisse der Abscheidung sind in den folgenden Tabellen zusammengefasst.

Abscheidedaten

| Bindemitteldispersion | 1 | 2 | 3 | 4 |
|---|---|---|---|---|
| Abscheidespannung | 300 | 280 | 310 | 290 |
| Filmdicke (µm) | 17 | 19 | 18 | 19 |

Mechanisch-technologische Kenndaten

| Beispiel | 1 | 2 | 3 | 4 |
|---|---|---|---|---|
| Erichsentiefung (mm) | 5,5 | 5,0 | 6,7 | 6,3 |
| Gitterschnitt | 0 | 0 | 0 | 0 |
| Biegeprobe | i.O. | i.O. | i.O. | i.O. |
| Impact (inch-pound) | (40) | (50) | (50) | (40) |
| cm × kg | 46 | 57,6 | 57,6 | 46 |

*Beispiel*

*Darstellung eines Pulverlackes*

64 g Diethanolamin werden in einem Reaktionsgefäss vorgelegt und auf 80°C erwärmt. Hierzu lässt man über einen Zeitraum von 3 Stunden 1482 g einer 75%igen Lösung von Epikote 1007 in Methylethylketon zufliessen. Danach erhöht man die Temperatur auf 90°C und hält diese Temperatur für eine Stunde.

Dann fügt man 295 g des Vernetzers gemäss Beispiel zu. Man mischt die Komponenten gründlich durch und entfernt sorgfältig die Lösungsmittel bei 110°C im Vakuum. Die resultierende Harzschmelze wird in eine Kupferwanne gegossen und nach dem Erkalten gebrochen und gemahlen.

Das erhaltene Pulver mit 60 Gew.-% Titandioxid (Rutil-Typ) in einem Extruder homogenisiert. Nach der üblichen Aufarbeitung erhält man einen für das elektrostatische Pulversprühverfahren geeigneten Pulverlack. Die Filme werden 20 Minuten bei 180°C eingebrannt. Man erhält weisse, glänzende Filme.

**Patentansprüche**

1. Hitzehärtbare Bindemittelmischung, bestehend aus einem organischen Kunstharz A und einem Vernetzungsmittel B, dadurch gekennzeichnet, dass das Kunstharz A ein von Epoxidgruppen freies Epoxidharzderivat, Polyesterharzderivat oder Acrylatharzderivat mit einem zahlenmittleren Molekulargewicht von 500 bis 20 000 und mindestens 0,2 Äquivalenten je 100 g Harz an primären und/oder sekundären Aminogruppen und/oder Hydroxylgruppen ist und das Vernetzungsmittel B eine organische Verbindung mit mindestens 2 β-Alkoxyalkylestergruppen pro Molekül ist.

2. Verfahren zum Herstellen von Überzügen durch Aufbringen eines Überzugsmittels auf ein Substrat in Form eines Filmes und anschliessendes Aushärten des Filmes durch Einbrennen, wobei das Überzugsmittel eine Bindemittelmischung aus einem organischen Kunstharz (A) und einem Vernetzungsmittel (B) enthält, dadurch gekennzeichnet, dass das Kunstharz A ein von Epoxidgruppen freies Epoxidharzderivat, Polyesterharzderivat oder Acrylatharzderivat mit einem zahlenmittleren Molekulargewicht von 500 bis 20 000 und mindestens 0,2 Äquivalenten je 100 g Harz an primären und/oder sekundären Aminogruppen und/oder Hydroxylgruppen ist und das Vernetzungsmittel B eine organische Verbindung mit mindestens 2 β-Alkoxyalkylestergruppen pro Molekül ist.

3. Bindemittelmischung oder Verfahren nach Anspruch 1 bzw. 2, dadurch gekennzeichnet, dass die Bindemittelmischung zusätzlich zu den Komponenten A und B als Komponente C Pigmente, Füllstoffe, Vernetzungskatalysatoren, Korrosionsschutzinhibitoren und weitere Lackhilfsmittel enthält.

4. Bindemittelmischung oder Verfahren nach Anspruch 1 bis 3, dadurch gekennzeichnet, dass der Anteil der Komponente A 40 bis 95 Gew.-% und der der Komponente B 5 bis 60 Gew.-% betragen, wobei die Summe der Komponenten A und B 100% beträgt.

5. Bindemittelmischung oder Verfahren nach Anspruch 1 bis 4, dadurch gekennzeichnet, dass die Komponente A eine zahlenmittlere Molmasse von 600 bis 10 000 aufweist.

6. Bindemittelmischung oder Verfahren nach Anspruch 1 bis 5, dadurch gekennzeichnet, dass die Komponente B eine zahlenmittlere Molmasse von 200 bis 10 000 aufweist.

7. Bindemittelmischung oder Verfahren nach Anspruch 1 bis 6, dadurch gekennzeichnet, dass die Komponente B ein Polyacrylatharz aus den folgenden Monomeren ist:

a) 10 bis 50 Gew.-% Acrylsäurealkylester mit 1 bis 18 Kohlenstoffatomen im Alkylrest und/oder Methacrylsäureester mit 2 bis 18 Kohlenstoffatomen im Alkylrest,

b) 0 bis 60 Gew.-% Methacrylsäuremethylester,

c) 0 bis 35 Gew.-% Styrol, α-Methylstyrol, o- und/oder p-Chlorstyrol, p-tert.-Butylstyrol, Vinyltoluol und/oder Vinylcarbazol und

d) 2 bis 35 Gew.% Acrylsäure- und/oder Methacrylsäure-β-Alkoxyalkylester oder einer anderen β-Alkoxyalkylestergruppen enthaltenden, olefinischen, ungesättigten, polymerisierbaren Verbindung, wobei die Summe der Bestandteile a, b, c und d 100% beträgt.

8. Bindemittelmischung oder Verfahren nach Anspruch 1 bis 7, dadurch gekennzeichnet, dass die Bindemittelmischung in feinteiliger, fester Form vorliegt.

9. Bindemittelmischung oder Verfahren nach Anspruch 1 bis 8, dadurch gekennzeichnet, dass die Bindemittelmischung gelöst in einem organischen Lösungsmittel vorliegt.

10. Bindemittelmischung oder Verfahren nach Anspruch 1 bis 9, dadurch gekennzeichnet, dass die Bindemittelmischung nach Protonisierung mit Säure in Form einer wässrigen Lösung oder Dispersion vorliegt.

11. Verfahren nach Anspruch 2 bis 7, dadurch gekennzeichnet, dass ein elektrisch leitendes Substrat in ein wässriges Bad des mindestens teilweise durch Säure neutralisierten Überzugsmittels, das gegebenenfalls zusätzlich organische Lösungsmittel enthält, eingetaucht und als Kathode geschaltet wird, der Film mittels Gleichstrom auf dem Substrat abgeschieden wird, das Substrat aus dem Bad entfernt wird und der Film durch Einbrennen gehärtet wird.

12. Verwendung einer Bindemittelmischung nach Anspruch 1 oder 3 bis 10 für die Herstellung von Überzügen.

**Claims**

1. Heat-curable binder mixture, consisting of an organic synthetic resin A and a crosslinking agent B, characterized in that the synthetic resin A is an epoxide resin derivative free of epoxide groups, a polyester resin derivative or an acrylate resin derivative having a number-average molecular weight of 500 to

20,000 and at least 0.2 equivalents of primary and/or secondary amino groups and/or hydroxyl groups per 100 g of resin, and the crosslinking agent B is an organic compound having at lest two β-alkoxyalkyl ester groups per molecule.

2. Process for producing coatings by applying a coating agent in the form of a film to a substrate and subsequent curing of the film by baking, the coating agent being a binder mixture consisting of an organic synthetic resin (A) and a crosslinking agent (B), characterized in that the synthetic resin A is an epoxide resin derivative free of epoxide groups, a polyester resin derivative or an acrylate resin derivative having a number-average molecular weight of 500 to 20'000 and at least 0.2 equivalents of primary and/or secondary amino groups and/or hydroxyl groups per 100 g of resin, and the crosslinking agent B is an organic compound having at least two β-alkoxyalkyl ester groups per molecule.

3. Binder mixture or process according to Claim 1 or 2 respectively, characterized in that the binder mixture contains pigments, fillers, crosslinking catalysts, corrosion inhibitors and other paint additives as a component C in addition to components A and B.

4. Binder mixture or process according to Claim 1 to 3, characterized in that the proportion of component A is 40 to 95% by weight and that of component B is 5 to 60% by weight, the sum of components A and B being 100%.

5. Binder mixture or process according to Claims 1 to 4, characterized in that component A has a number-average molecular mass from 600 to 10,000.

6. Binder mixture or process according to Claims 1 to 5, characterized in that component B has a number-average molecular mass from 200 to 10,000.

7. Binder mixture or process according to Claims 1 to 6, characterized in that component B is a polyacrylate resin consisting of the following monomers:

a) 10 to 50% by weight of an alkyl acrylate having 1 to 18 carbon atoms in the alkyl radical and/or methacrylate having 2 to 18 carbon atoms in the alkyl radical,

b) 0 to 60% by weight of methyl methacrylate,

c) 0 to 35% by weight of styrene, α-methylstyrene o- and/or p-chlorostyrene, p-tert.-butylstyrene, vinyltoluene and/or vinylcarbazole and

d) 2 to 35% by weight of a β-alkoxyalkyl acrylate and/or methacrylate or of another olefinic, unsaturated, polymerizable compound containing β-alkoxyalkyl ester groups, the sum of constituents a, b, c and d being 100%.

8. Binder mixture or process according to Claims 1 to 7, characterized in that the binder mixture is present in a finely particulate, solid form.

9. Binder mixture or process according to Claims 1 to 7, characterized in that the binder mixture is present as a solution in an organic solvent.

10. Binder mixture or process according to Claims 1 to 7, characterized in that the binder mixture is present, after protonization with acid, in the form of an aqueous solution or dispersion.

11. Process according to Claims 2 to 7, characterized in that an electrically conductive substrate is immersed into an aqueous bath of the coating agent which has been at least partially neutralized by acid and which, if appropriate, additionally contains organic solvents, and is connected as the cathode, the film is deposited on the substrate by means of a direct current, the substrate is removed from the bath and the film is cured by baking.

12. Use of a binder mixture according to Claims 1 or 3 to 10 for producing coatings.

**Revendications**

1. Mélange de liant thermodurcissable, formé d'une résine synthétique organique A et d'un agent de réticulation B, caractérisé par le fait que la résine synthétique A est un dérivé de résine d'époxyde exempt de groupes époxyde, un dérivé de résine de polyester ou un dérivé de résine d'acrylate ayant un poids moléculaire moyen en nombre de 500 à 20 000 et contenant au moins 0,2 équivalent, par 100 g de résine, de groupes amine primaires et/ou secondaires et/ou de groupes hydroxyle et que l'agent de réticulation B est un composé organique contenant au moins 2 groupes ester de β-alcoxyalkyle par molécule.

2. Procédé de réalisation de revêtements par application d'un agent de revêtement sur un subjectile, sous la forme d'un feuil, et ensuite durcissement par cuisson, l'agent de revêtement contenant un mélange de liant formé d'une résine synthétique organique (A) et d'un agent de réticulation (B), caractérisé par le fait que la résine synthétique A est un dérivé de résine d'époxyde exempt de groupes époxyde, un dérivé de résine de polyester ou un dérivé de résine d'acrylate ayant un poids moléculaire moyen en nombre de 500 à 20 000 et contenant au moins 0,2 équivalent, par 100 g de résine, de groupes amine primaires et/ou secondaires et/ou de groupes hydroxyle et que l'agent de réticulation B est un composé organique contenant au moins 2 groupes ester de β-alcoxyalkyle par molécule.

3. Mélange de liant ou procédé selon l'une des revendications 1 et 2, caractérisé par le fait que le mélange de liant contient, outre les constituants A et B, comme constituant C, des pigments, charges, catalyseurs de réticulation, inhibiteurs de protection contre la corrosion et autres adjuvants pour peintures.

4. Mélange de liant ou procédé selon l'une quelconque des revendications 1 à 3, caractérisé par le fait que la proportion du constituant A est de 40 à 95% en poids et celle du constituant B de 5 à 60% en poids, le total des constituants A et B étant de 100%.

5. Mélange de liant ou procédé selon l'une quelconque des revendications 1 à 4, caractérisé par le fait que le constituant A présente une masse moléculaire moyenne en nombre de 600 à 10 000.

6. Mélange de liant ou procédé selon l'une quelconque des revendications 1 à 5, caractérisé par le fait que le constituant B présente une masse moléculaire moyenne en nombre de 200 à 10 000.

7. Mélange de liant ou procédé selon l'une quelconque des revendications 1 à 6, caractérisé par le fait que le constituant B est une résine de polyacrylate formée des monomères suivants:

a) 10 à 50% en poids d'ester alkylique d'acide acrylique contenant 1 à 18 atomes de carbone dans le radical alkyle et/ou d'ester d'acide méthacrylique contenant 2 à 18 atomes de carbone dans le radical alkyle,

b) 0 à 60% en poids de méthacrylate de méthyle,

c) 0 à 35% en poids de styrène, d'α-méthylstyrène, d'o- et/ou p-chlorostyrène, de p-tertiobutylstyrène, de vinyltoluène et/ou de vinylcarbazole, et

d) 2 à 35% en poids d'ester de β-alcoxyalkyle d'acide acrylique et/ou méthacrylique ou d'un autre composé insaturé oléfinique polymérisable contenant des groupes ester de β-alcoxyalkyle, le total des constituants a, b, c et d étant de 100%.

8. Mélange de liant ou procédé selon l'une quelconque des revendications 1 à 7, caractérisé par le fait que le mélange de liant se présente sous forme solide en fines particules.

9. Mélange de liant ou procédé selon l'une quelconque des revendications 1 à 8, caractérisé par le fait que le mélange de liant se présente à l'état dissous dans un solvant organique.

10. Mélange de liant ou procédé selon l'une quelconque des revendications 1 à 9, caractérisé par le fait que le mélange de liant, après protonisation par un acide, se présente sous la forme d'une solution ou dispersion aqueuse.

11. Procédé selon les revendications 2 à 7, caractérisé par le fait que l'on plonge un subjectile conducteur de l'électricité dans un bain aqueux de l'agent de revêtement au moins partiellement neutralisé par un acide, qui contient éventuellement en outre des solvants organiques et qu'on le branche comme cathode, que l'on dépose le feuil au moyen de courant continu sur le subjectile, que l'on retire le subjectile du bain et que l'on durcit le feuil par cuisson.

12. Utilisation d'un mélange de liant selon l'une des revendications 1 et 3 à 10, pour la réalisation de revêtements.